# EUROPEAN PATENT SPECIFICATION

(11) **EP 0 721 527 B1**
(45) Date of publication and mention of the grant of the patent: **09.06.1999**
(21) Application number: 94928525.8
(22) Date of filing: 05.09.1994
(51) Int. Cl.: D21C 11/02, D21C 11/12, D21C 1/04

(54) **PREPARATION OF COOKING LIQUOR CONTAINING SULPHITE**
HERSTELLUNG EINER SULFIT-ENTHALTENDEN KOCHLAUGE
PREPARATION D'UNE LIQUEUR DE CUISSON CONTENANT DU SULFITE

(30) Priority: 27.09.1993 SE 9303137
(43) Date of publication of application: 17.07.1996
(73) Proprietor: KVAERNER PULPING TECHNOLOGIES AB, 651 15 Karlstad (SE)
(72) Inventor: STIGSSON, Lars, S-663 02 Hammarö (SE); KIGNELL, Jan-Erik, S-194 40 Upplands Väsby (SE)
(86) International application number: SE9400816
(87) International publication number: WO9509269

(56) References cited:
- WO-A-94/20677
- SE-A- 9 202 996
- SE-B- 327 889
- SE-B- 455 708
- SVENSK PAPPERSTIDNING, No. 4, February 1963, ARNE BERGHOLM, "Recovery of Chemicals from Sodium-based Waste Liquors", page 125 - page 132.
- PULP AND PAPER MANUFACTURE, Vol. 4, SULFITE SCIENCE AND TECHNOLOGY, 1985, 3rd ed., ATLANTA, O.V. INGRUBER et al., Tappi, page 130 - page 133, page 160 - page 163.

## Description

The present invention relates to a process for preparing cooking liquid containing sulphite, comprising the following steps: (a) partial oxidation of a cellulose spent liquor in a reactor operating at a temperature exceeding approximately 700°C and at a pressure exceeding 0.3 MPa, where an oxygen-containing gas is supplied to the reactor in such a quantity that the spent liquor is partially oxidized with the formation of a combustible gas, which contains carbon monoxide, hydrogen and hydrogen sulphide, and a smelt containing alkali carbonate; (b) the smelt which has been formed and which contains alkali carbonate is separated off from the combustible gas, which smelt is drawn off in the form of a liquid or a liquid slurry; (c) the liquid or liquid slurry which has been drawn off is used wholly or in part for preparing cooking liquor and/or is used without prior causticization for delignifying cellulose-containing material.

In recent decades, technical and environmentally conditioned advances in delignification technology, screening, washing, bleaching and recovery have strengthened the sulphate process in relation to other processes and nowadays sulphate or kraft pulp accounts for more than 75% of the production of chemical pulp.

The sulphite processes, which dominated for a long time, have led a languishing existence, principally due to the fact that the sulphite pulps have inferior strength properties but also because the recovery of chemicals is complex. Extensive research has been conducted with a view to improving the strength properties of chemical sulphite pulp and, during the eighties, some alkaline sulphite processes were developed which partially remove the quality problems associated with sulphite pulp.

Sulphite-based processes commonly occur in association with the production of semichemical CTMP pulps.

One of the more modern sulphite processes which has been discussed and also tested out on a pilot scale and on full scale is the so-called anthraquinone-catalysed neutral sulphite method (NS-AQ). The delignification of wood with "neutral sulphite" at pH 9-11.5 has been used and is being used at present principally for manufacturing CTMP and other semichemical pulps. The discovery of anthraquinone as a catalyst in conjunction with delignification has strengthened interest in alkaline sulphite processes, since it has been found that the combination sulphite/anthraquinone gives rise to interesting synergistic effects during cooking and that a chemical pulp having kraft-like properties can be produced. At an even higher pH, 10-13.5, the process is turned into alkaline sulphite which, together with anthraquinone, can yield a pulp having very good strength and bleachability properties.

Production of chemical alkaline sulphite pulps can also take place in other solvents than water. The ASAM process (alkaline sulphite anthraquinone methanol) is based on delignification in methanol. The methanol is recovered in a system which is integrated with the evaporation system, the methanol being stripped with steam from the weak black liquor. In other cases, the sulphite cooking liquid is recovered in a recovery system which is conventional for the sulphite industry and consists of a recovery boiler and, for example, a Tampella or Rauma process. If the alkalinity in the cooking is less than about pH 12, there is no requirement for causticization and a lime sludge reburning kiln. The pulp which is produced is stated to be of very good quality, fully comparable with kraft pulp.

As compared with the sulphate process, neutral and alkaline sulphite processes have some potentially great advantages. As a rule, the pulps are readily bleached and full brightness can be achieved using only oxygen and peroxide. The consumption of alkali in the bleaching plant is lower. The yield is higher, being 6-8% for fully bleached pulp and 17-22% for linerboard qualities. In certain cases, reburning of lime sludge and causticization can be avoided entirely. Pulp properties such as tear strength and tensile strength are good despite the higher yield. Another factor, which is becoming ever more important, is that the pulp can be produced without the odour which is associated with the production of kraft pulp.

The disadvantages which have been associated with, for example, the said NS-AQ process are stated to be:
- The speed of delignification is lower than it is for kraft pulp cooking. The cooking time to kappa 35 is approximately 25% higher. Cooking to lower kappa requires more efficient carbohydrate stabilization.
- It is necessary to add sodium hydroxide in order to increase the pH in the spent liquor to more than 10 in order to prevent incrustation in the evaporation system.
- The calorific value in the spent liquor is naturally lower owing to the high yield.
- Regeneration of the cooking liquor, which principally contains sodium sulphite and sodium carbonate, is complicated and, in addition to a recovery boiler, also requires that the green liquor is converted to sodium sulphite and sulphide-free alkali.

Many sulphite-based CTMP plants lack recovery of cooking chemicals and new cooking liquors are prepared from imported sulphur dioxide and sodium hydroxide. In addition to the pollution load on the environment, this results in the cost of make-up chemicals becoming burdensome.

It is known that, when sulphur-containing cellulose spent liquors are gasified, substantial quantities of sulphur are converted to gaseous hydrogen sulphide, especially when the pressure in the gasifier is increased. Gasification of cellulose spent liquors, as an alternative to conventional recovery in recovery boilers, has recently been commercialized for spent liquors from the sulphate pulp industry.

US-A-4,808,264 discloses a gasifier which is particularly useful when applying the present invention. The process principally describes gasification of cellulose spent liquors and recovery of sulphide-containing cooking liquids by means of countercurrent washing using alkaline washing liquids. As an alternative, it is stated that sulphur-containing cooking chemicals can be recovered from the process gas using an amine-based regenerative gas washing system.

The so-called SCA Billerud method for recovering sulphite cooking liquors by gasification, described in more detail in, for example, Svensk Papperstidning (Swedish Paper Journal) no. 4, 28th February 1963, pp. 125-132, discloses a process for recovering sulphite cooking liquors by gasification and absorption of sulphur dioxide in alkali.

The object of the present invention is to make available an improved process for preparing cooking liquors containing sulphite, which process removes disadvantages which are associated with sulphite processes.

The process according to the invention is characterized by the additional steps: (d) the combustible gas is contacted by an absorption liquid, consisting of an alkali carbonate solution, which is able to absorb hydrogen sulphide, which liquid is subsequently drawn off and supplied to a device 11 for driving off a gas containing hydrogen sulphide and carbon dioxide from the liquid; (e) a carbon dioxide-containing gas and/or a concentrated solution of alkali bicarbonate or bicarbonate crystals are supplied to the device (11) for driving off hydrogen sulphide-containing gas; (f) the hydrogen sulphide-containing gas which has been driven off is used, wholly or in part, for preparing sulphite cooking liquor which is drawn off and supplied to a pulp digester.

The process according to the invention removes disadvantages which are associated with sulphite processes, partly because it includes novel recovery steps and partly because cooking liquors are produced which result in improved selectivity and increased speed of delignification.

The abovementioned known processes for recovery from cellulose spent liquors consequently lack an important feature in the present invention, namely that pyrolytic gas containing hydrogen sulphide is supplied to a regenerative gas washing system for preparing concentrated hydrogen sulphide gas, which hydrogen sulphide gas is used for preparing sulphite cooking liquor.

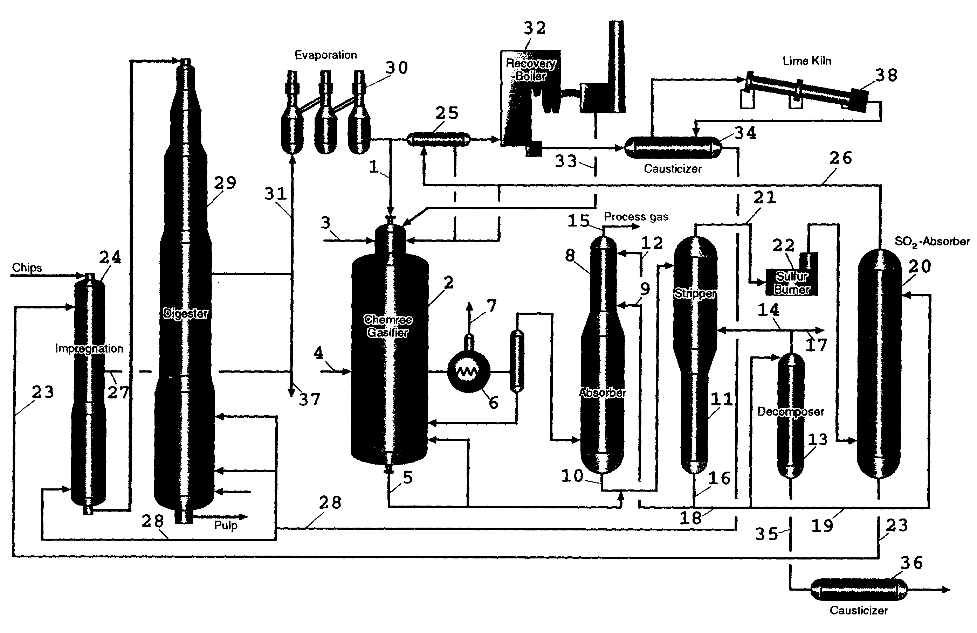

The invention is described in more detail by means of a general implementation example and, after that, by reference to the drawing in which Figure 1 shows a plant for producing pulp and recovering chemicals and heat and preparing cooking liquor.

Cellulose spent liquor is supplied to a reactor, operating above atmospheric pressure, together with an oxygen-containing gas, whereupon the cellulose spent liquor is partially oxidized with the formation of a smelt and a hot combustible gas. The hot combustible gas is cooled rapidly by direct contact with a cooling liquid, which liquid dissolves the smelt which has been formed. The liquid is drawn off from the combustible gas. The gas which has thus been cooled is simultaneously saturated with steam and achieves a temperature of between about 110 and 200°C, corresponding to the temperature at which the cooling liquid boils under the prevailing pressure.

When a cellulose spent liquor is partially oxidized in a reactor operating at a pressure of 25 atm and a temperature of 850°C, and with a supply of air corresponding to 40% of the stoichiometric requirement for complete oxidation of the cellulose spent liquor, a gas is obtained which has the following approximate composition:

| | | | |
|---|---|---|---|
| CO | 10-15% | H₂S | 0.5-4% |
| H₂ | 12-20% | COS | 0.02-0.5% |
| CH₄ | 1- 4% | N₂ | balance |
| CO₂ | 10-15% | | |

After cooling and separation of alkali, the gas is cooled down, by indirect heat exchange, to a temperature within the interval 80-180°C and subsequently transferred to a gas/liquid contact zone, for example in the form of an absorption column, where the gas is contacted by an absorption liquid.

The pressure in the gas/liquid contact zone corresponds in the main to the pressure in the gasification reactor minus the drop in pressure in the conduits.

The absorption liquid consists of a liquid with properties which are appropriate for selectively, relative to carbon dioxide, washing out sulphides in gaseous form. The absorption can take place by means of a chemical reaction between sulphur compounds and the absorption liquid, or by means of a purely physical absorption, or a combination of the two. Such absorption liquids are alkali carbonate solutions.

The absorption liquid is drawn off from the gas/liquid contact zone. The combustible gas, which has in the main been freed from sulphur compounds, can subsequently be drawn off and used, for example, for energy production in a gas boiler or in a gas turbine plant.

The absorption liquid which has been drawn off from the absorption column is transferred, directly or indirectly, to a regeneration zone, for example a stripper operating at a lower pressure than the absorption column, preferably around or below atmospheric pressure.

The concentration of H₂S in the absorption liquid is highly dependent on the partial pressure of H₂S above the liquid, and the hydrogen sulphide is driven out from the absorption liquid when the pressure falls. The extent to which the hydrogen sulphide is driven off can be increased by supplying steam in the stripper.

According to the present invention, the absorption liquid consists of an alkali carbonate solution in which the hydrogen sulphide is absorbed and reacts with the formation of alkali hydrogen sulphide.

In this case, the hydrogen sulphide is expelled in the stripper not only by the fall in pressure and by any steam which may be supplied but also by supplying a carbon dioxide-containing gas or a concentrated solution of bicarbonate. Using this preferred procedure, a high concentration of hydrogen sulphide can be obtained in the stripper discharge.

The carbon dioxide-containing gas can expediently consist of residual gases from the expulsion of carbon dioxide from alkali bicarbonate solutions and/or from the processing of the stripper discharge gas after the major part of the sulphur compounds have been separated off.

The stripper liquid which has in the main been freed from sulphur compounds is withdrawn from the regeneration zone and returned, wholly or in part, to the absorption zone in the form of regenerated absorption liquid.

According to a preferred embodiment in an alkali-based washing system, a part of the liquid flow from the regeneration zone is used for producing alkali which is in the main sulphide-free.

To the extent that the liquid which is discharged from the regeneration zone still has, for various reasons, too high a content of bicarbonate and/or sulphides, carbon dioxide and/or hydrogen sulphide can be driven off by, for example, heating the liquid directly or indirectly with steam. The liquid which is obtained in this context, and which is in the main freed from sulphide and bicarbonate, can be used, for example, for preparing alkali hydroxide in an associated causticization plant.

It is expedient to operate the absorption at a higher pressure, preferably between about 15 and 30 atm, partly in order to decrease the apparatus volumes and partly in order to be able to maintain a high temperature in the absorber system.

The hydrogen sulphide-containing gas, which has been driven off from the stripper system, can be treated in a number of different ways in order to activate it and recirculate it to the digester as an active cooking chemical.

According to the invention, the hydrogen sulphide-rich stream from the regeneration zone is used for preparing sulphite cooking liquor, with the hydrogen sulphide being oxidized to sulphur dioxide which is then absorbed in an alkaline liquid, for example liquid drawn off from the regeneration zone before or after causticization, or in alkali carbonate-containing liquid from the cooling system of the gasifier. The sulphite-containing cooking liquid thereby obtained is returned to the digester and is used, for example, as impregnating liquid. Alternatively, a part of the said sulphur dioxide can be transferred to the digester.

The impregnation can be effected in accordance with known procedures, where appropriate in combination with circulating discharge liquors or other alkaline liquid.

Complex-forming agents of the EDTA or DTPA type can be added to the sulphite-containing impregnating liquor in order to selectively immobilize cellulose-degrading transition metals which have been supplied together with the wood.

The impregnating liquid can be displaced and drawn off from the impregnating vessel, or alternatively also allowed to pass into the digester.

According to one embodiment, the displaced impregnating liquor is drawn off and recovered in a separate recovery plant for recovering sulphite cooking liquor by gasification, absorption of hydrogen sulphide, expulsion of hydrogen sulphide from the absorption liquid, oxidation to SO₂ and preparation of new sulphite cooking liquor.

The main cooking, which follows the impregnation, is preferably carried out using known technology with cooking liquids containing alkali hydroxide and/or carbonate or, more preferably, using green liquor or cooking liquid obtained and prepared from the alkaline cooling liquids of a gasification system without these liquids having been subjected to causticization.

One of the main aims of the present invention has thereby been achieved, namely recovery of cooking chemicals and preparation of cooking liquids which have not been subjected to causticization and which provide a pulp product of high quality.

When the present invention is put into practice in accordance with the abovementioned embodiment, in which the absorption liquid consists of an alkali carbonate solution, other sulphide-containing alkali, such as, for example, green liquor from the mill's green liquor system or quench and cooling liquids from gasification of cellulose spent liquor, can also be supplied to the regenerative gas washing system. In association with this, a corresponding liquid stream can be drawn off from the washing system which, if so desired, can be used for preparing sulphide-free alkali.

Sulphur dioxide produced in accordance with the present invention can, in part, be supplied, directly or indirectly, to the impregnation stage of the digester and/or used for pH adjustment in the bleaching plant.

A division of sulphur and alkali into separate streams has great advantages, something which will be evident to the person skilled in the art, and a number of areas of application in a modern pulp mill are conceivable.

The hydrogen sulphide-containing gas can, for example, be oxidized with sulphur dioxide to form elemental sulphur in a Claus process, or be converted into elemental sulphur by catalytic oxidation in liquid phase and used for preparing polysulphides in accordance with known procedures.

Alternatively, the hydrogen sulphide-containing gas can be partly recirculated to the gasification system or used when impregnating the wood.

In that which follows, reference is made to Figure 1.

Cellulose spent liquor 1 containing dissolved sulphonated and sulphidated lignin compounds is supplied to a reactor 2, which is pressurized to 25 bar, together with an oxygen-containing gas 3, in which reactor the cellulose spent liquor is partially oxidized with the formation of a smelt and a hot combustible gas containing hydrogen sulphide. The hot combustible gas is cooled rapidly by direct contact with condensate 4 in a water seal, with the smelt which has formed being dissolved and drawn off at 5. The combustible gas is cooled in a condenser 6 by indirect heat exchange with feed water, with low-pressure steam 7 being produced.

The combustible gas is then transferred to an absorption column 8 in which the gas is contacted by an alkaline liquid 9 containing dissolved sodium carbonate and sodium bicarbonate. The alkaline liquid, which is supplied at two or more levels in the absorption column, reacts with the sulphides in the process gas and forms soluble sodium hydrogen sulphide. The liquid 10 is withdrawn from the bottom of the absorption column and is transferred to a regeneration column or stripper 11. The process gas, which to a large extent has been freed from sulphides, is contacted once again by an absorption liquid 12 in the upper part of the absorption column in order to wash out remaining sulphides. The absorption liquid 12 consists of dissolved alkali carbonate with a very low content of sulphide recovered from the decarbonator column 13. The absorption liquid 12 is mixed and drawn off together with the liquid 10 from the absorption column.

The clean gas 15 is then transferred to combustion, for example in a gas turbine combustor or, after expansion, to a bark boiler/lime kiln.

The warm liquid 10 is flashed into the stripper 11, which is operating at a negative pressure, whereupon hydrogen sulphide is liberated from the absorption liquid. Further discharge of the hydrogen sulphide is effected by supplying a carbon dioxide-containing gas 14 and steam to the stripper.

The stripper liquid 16, which has in the main been freed from sulphur, is drawn off and returned, after bleeding-off 18, to the absorption column in the form of regenerated absorption liquid 9. Liquid 18 which has been bled off is supplied to a decarbonator 13, where remaining sulphide and dissolved carbon dioxide are driven off and returned, wholly or in part, via a conduit 14 to the stripper, or is withdrawn from the gas washing system via a conduit 17.

A part of the alkali from the stripper, which alkali is in the main free of sulphide, is conducted away via a conduit 19 and supplied to a sulphur dioxide-absorber 20 for preparing sulphite cooking liquor.

The hydrogen sulphide-containing gas 21, which has been drawn off from the stripper, is oxidised with air or oxygen in a sulphur burner 22 with the formation of a sulphur dioxide-containing gas.

The gas is supplied to the sulphur dioxide absorber 20, from which the sulphite cooking liquor is conducted away 23 and returned to the impregnating vessel 24. The cooling liquid 5 which has been drawn off from the gasification system is mixed with the liquid 10 and is also allowed to pass into the stripper 11.

The gas 26, which has been drawn off from the sulphur dioxide absorber 20 and is now in the main freed from SO₂ is transferred, wholly or in part, to a reactor 25 for expelling sulphur compounds from the cellulose spent liquor. Alternatively, the gas is transferred to the reactor 2 or to a recovery boiler or lime kiln.

Complexing agents such as EDTA or DTPA are added to the sulphite cooking liquor 23 and, after that, the liquor is supplied to the impregnating vessel 24. The impregnating liquid is circulated through the impregnating vessel in order to create a predetermined wood/liquid ratio, and a constituent stream 27 is drawn off and supplied to the release liquor stream 31. Alternatively, this constituent stream is drawn off and conveyed away for separate recovery through a conduit 37.

White liquor 28 is added to impregnated and partially delignified cellulose substance and the material is transferred to a conventional kraft cooking system, expediently a so-called ITC cooking system 29.

The pulp substance which is drawn off from the digester has a low kappa number and excellent strength properties and is readily bleached using environmentally friendly chemicals.

The resulting release liquor stream or the black liquor 31 is mixed with the impregnating liquor and evaporated in a conventional black-liquor evaporating plant 30. The concentrated black liquor is divided into two constituent streams, with, for example, 15% being conducted away and constituting the cellulose spent liquor stream 1. The remaining black liquor outflow is subjected, in the reactor 25, to a treatment for driving off sulphur compounds. The black liquor is then incinerated in a conventional recovery boiler 32. The green liquor which has been formed is causticized 34 in a known manner and returned to the digester . The lime is regenerated in a lime kiln 38. The electrostatic filter ash 33 is leached with regard to its potassium and chloride content and supplied to the reactor 2 in the form of a slurry.

A sulphide-free carbonate solution 35 is drawn off from the so-called decomposer 13 and causticized 36 and transferred to the bleaching plant.

The above example is a preferred embodiment but, as will be evident to the person skilled in the art, there are several variants when applying the invention. For example, within the scope of the invention, it is possible completely to replace the recovery boiler with the gasification system, with all black liquor being fed to the reactor 2 and the major part of the cooling liquid being used for preparing cooking liquor with or without associated causticization. The sulphide/sulphite relationship for the cooking system can be regulated as required. The sulphite cooking liquid can be drawn off to a NSSC/CTMP plant which is connected to the chemical pulp mill, or the invention can be used for preparing cooking liquor in an independent sulphite-based NSSC/CTMP plant.

## Claims

1. Process for preparing cooking liquor containing sulphite, comprising the following steps
(a) partial oxidation of a cellulose spent liquor in a reactor (2) operating at a temperature exceeding about 700°C and at a pressure exceeding 0.3 MPa, where an oxygen-containing gas is supplied to the reactor (2) in a quantity such that the spent liquor is partially oxidized with the formation of a combustible gas, which contains carbon monoxide, hydrogen and hydrogen sulphide, and a smelt containing alkali carbonate;
(b) smelt which has been formed and which contains alkali carbonate is separated off from the combustible gas, which smelt is drawn off in the form of a liquid or liquid slurry;
(c) the liquid or the liquid slurry which has been drawn off is used, wholly or in part, for preparing cooking liquor and/or is used, without prior causticization, for delignifying cellulose-containing material,
characterized by the additional steps:
(d) the combustible gas is contacted by an absorption liquid, consisting of an alkali carbonate solution, which is able to absorb hydrogen sulphide, which liquid is then drawn off and supplied to a device (11) for driving off a gas containing hydrogen sulphide and carbon dioxide from the liquid;
(e) a carbon dioxide-containing gas and/or a concentrated solution of alkali bicarbonate or bicarbonate crystals are supplied to the device (11) for driving off hydrogen sulphide-containing gas;
(f) the hydrogen sulphide-containing gas which has been driven off is used, wholly or in part, for preparing sulphite cooking liquor which is drawn off and supplied to a pulp digester system.

2. Process according to Claim 1, characterized in that hydrogen sulphide-containing gas is oxidized to sulphur dioxide, which is absorbed in an alkaline liquid for preparing sulphite cooking liquor.

3. Process according to any one of Claims 1-2, characterized in that the sulphite cooking liquor is used for preimpregnating cellulose-containing fibre material in an impregnating vessel (24), which impregnating liquor is then displaced out of the impregnating vessel (24) and drawn off and transferred to a separate recovery plant.

4. Process according to Claim 3, characterized in that the impregnating liquor is drawn off from the impregnating vessel (24) and supplied to the release liquor system of the digester

5. Process according to Claim 3 or 4, characterized in that sulphur dioxide and/or complex-forming agents or other additives are added to the impregnating vessel (24) in order to immobilize cellulose-degrading substances.

6. Process according to any one of Claims 3-5, characterized in that the cooking following the impregnation is carried out using cooking liquid containing alkali hydroxide and/or alkali carbonate or conventional kraft cooking liquors.

7. Process according to any one of Claims 3-6, characterized in that the cooking following the impregnation is carried out using cooking liquid obtained and prepared from the alkaline cooling liquids of a gasification system and/or green liquor without these liquids having undergone causticization.

## Patentansprüche

1. Verfahren zur Herstellung von sulfithaltiger Kochlauge, bei dem man
(a) eine Celluloseablauge in einem bei einer Temperatur über etwa 700°C und einem Druck über 0,3 MPa betriebenen Reaktor (2) teiloxidiert, wobei man dem Reaktor (2) ein sauerstoffhaltiges Gas in einer solchen Menge zuführt, daß die Ablauge unter Bildung eines Kohlenmonoxid, Wasserstoff und Schwefelwasserstoff enthaltenden brennbaren Gases und einer alkalicarbonathaltigen Schmelze teiloxidiert wird;
(b) die gebildete alkalicarbonathaltige Schmelze von dem brennbaren Gas abtrennt und in Form einer Flüssigkeit oder einer Flüssigkeitsaufschlämmung abzieht;
(c) die abgezogene Flüssigkeit oder Flüssigkeitsaufschlämmung teilweise oder vollständig zur Herstellung von Kochlauge und/oder ohne vorherige Kaustifizierung zur Delignifizierung von cellulosehaltigem Material verwendet,
dadurch gekennzeichnet, daß man außerdem:
(d) das brennbare Gas mit einer Absorptionsflüssigkeit, die aus einer Alkalicarbonatlösung besteht und Schwefelwasserstoff absorbieren kann, in Berührung bringt, danach die Flüssigkeit abzieht und einer Vorrichtung (11) zum Austreiben eines Schwefelwasserstoff und Kohlendioxid enthaltenden Gases aus der Flüssigkeit zuführt;
(e) der Vorrichtung (11) zum Austreiben von schwefelwasserstoffhaltigem Gas ein kohlendioxidhaltiges Gas und/oder eine konzentrierte Akalihydrogencarbonatlösung oder -Hydrogencarbonatkristalle zuführt und
(f) das ausgetriebene schwefelwasserstoffhaltige Gas teilweise oder vollständig zur Herstellung von Sulfitkochlauge verwendet, welche abgezogen und einem Zellstoffkochersystem zugeführt wird.

2. Verfahren nach Anspruch 1, dadurch gekennzeichnet, daß man das schwefelwasserstoffhaltige Gas zu Schwefeldioxid oxidiert, welches zur Herstellung von Sulfitkochlauge in einer alkalischen Flüssigkeit absorbiert wird.

3. Verfahren nach einem der Ansprüche 1-2, dadurch gekennzeichnet, daß man die Sulfitkochlauge zur Vortränkung von cellulosehaltigem Fasermaterial in einem Tränkbehälter (24) verwendet, dann die Tränklauge aus dem Tränkbehälter (24) verdrängt, abzieht und einer separaten Rückgewinnungsanlage zuführt.

4. Verfahren nach Anspruch 3, dadurch gekennzeichnet, daß man die Tränklauge aus dem Tränkbehälter (24) abzieht und dem Rücklaugesystem des Kochers zuführt.

5. Verfahren nach Anspruch 3 oder 4, dadurch gekennzeichnet, daß man dem Tränkbehälter (24) Schwefeldioxid und/oder Komplexbildner oder andere Additive zur Immobilisierung von celluloseabbauenden Substanzen zusetzt.

6. Verfahren nach einem der Ansprüche 3-5, dadurch gekennzeichnet, daß man das auf die Tränkung folgende Kochen mit Alkalihydroxid und/oder Alkalicarbonat enthaltender Kochflüssigkeit oder mit herkömmlichen Kraftkochlaugen durchführt.

7. Verfahren nach einem der Ansprüche 3-6, dadurch gekennzeichnet, daß man das auf die Tränkung folgende Kochen mit Kochflüssigkeit, die aus den alkalischen Kühlflüssigkeiten eines Vergasungssystems ohne Kaustifizierung erhalten und hergestellt wurde, und/oder Grünlauge durchführt.

## Revendications

1. Procédé de préparation d'une liqueur de cuisson contenant du sulfite, comprenant les étapes suivantes
(a) oxydation partielle d'une liqueur de cellulose usée dans un réacteur (2) fonctionnant à une température supérieure à environ 700°C et à une pression supérieure à 0,3 MPa, où un gaz contenant de l'oxygène est introduit dans le réacteur (2) en une quantité telle que la liqueur usée soit partiellement oxydée avec formation d'un gaz combustible, qui contient du monoxyde de carbone, de l'hydrogène et du sulfure d'hydrogène, et une masse fondue contenant du carbonate alcalin ;
(b) la masse fondue qui a été formée et qui contient du carbonate alcalin est séparée du gaz combustible, la masse fondue étant soutirée sous forme d'un liquide ou d'une bouillie liquide ;
(c) le liquide ou la bouillie liquide qui a été soutiré(e) est utilisé(e), totalement ou en partie, pour la préparation d'une liqueur de cuisson et/ou est utilisé(e), sans caustification préalable, pour la délignification d'un matériau contenant de la cellulose,
caractérisé par les étapes supplémentaires :
(d) le gaz combustible est mis en contact avec un liquide d'absorption, constitué d'une solution de carbonate alcalin, qui est capable d'absorber le sulfure d'hydrogène, lequel liquide est alors soutiré et introduit dans un dispositif (11) en vue de chasser un gaz contenant du sulfure d'hydrogène et du dioxyde de carbone du liquide ;
(e) un gaz contenant du dioxyde de carbone et/ou une solution concentrée de bicarbonate alcalin ou des cristaux de bicarbonate sont introduits dans le dispositif (11) en vue de chasser le gaz contenant du sulfure d'hydrogène ;
(f) le gaz contenant du sulfure d'hydrogène qui a été chassé est utilisé, totalement ou en partie, pour la préparation d'une liqueur de cuisson au sulfite qui est soutirée et introduite dans un système lessiveur de pâte.

2. Procédé selon la revendication 1, caractérisé en ce que le gaz contenant du sulfure d'hydrogène est oxydé en dioxyde de soufre, qui est absorbé dans un liquide alcalin en vue de préparer une liqueur de cuisson au sulfite.

3. Procédé selon l'une quelconque des revendications 1-2, caractérisé en ce que la liqueur de cuisson au sulfite est utilisée pour préimprégner un matériau fibreux contenant de la cellulose dans un vase d'imprégnation (24), laquelle liqueur d'imprégnation est alors sortie du vase d'imprégnation (24) et soutirée et transférée à une installation de récupération séparée.

4. Procédé selon la revendication 3, caractérisé en ce que la liqueur d'imprégnation est soutirée du vase d'imprégnation (24) et introduite dans le système de liqueur de recyclage du lessiveur.

5. Procédé selon les revendications 3 ou 4, caractérisé en ce que du dioxyde de soufre et/ou des agents complexants ou d'autres additifs sont ajoutés dans le vase d'imprégnation (24) en vue d'immobiliser les substances dégradant la cellulose.

6. Procédé selon l'une quelconque des revendications 3-5, caractérisé en ce que la cuisson faisant suite à l'imprégnation est réalisée en employant un liquide de cuisson contenant de l'hydroxyde alcalin et/ou du carbonate alcalin, ou des liqueurs de cuisson de kraft traditionnelles.

7. Procédé selon l'une quelconque des revendications 3-6, caractérisé en ce que la cuisson faisant suite à l'imprégnation est réalisée en employant un liquide de cuisson obtenu et préparé à partir des liquides de refroidissement alcalins d'un système de gazéification et/ou d'une liqueur verte sans que ces liquides aient subi de caustification.
